**Europäisches Patentamt**

**European Patent Office**

**Office européen des brevets**

(19)

(11) Veröffentlichungsnummer: **0 015 409**
**B1**

(12) **EUROPÄISCHE PATENTSCHRIFT**

(45) Veröffentlichungstag der Patentschrift:
**27.10.82**

(51) Int. Cl.³: **B 01 D 46/04**, B 01 D 46/46

(21) Anmeldenummer: **80100691.7**

(22) Anmeldetag: **11.02.80**

(54) **Verfahren zur Steuerung des Reinigungsverlaufes beim Reinigen von Filtermaterial in textilen Sperrfiltern.**

(30) Priorität: **12.02.79 SE 7901181**

(43) Veröffentlichungstag der Anmeldung:
**17.09.80 Patentblatt 80/19**

(45) Bekanntmachung des Hinweises auf die Patenterteilung:
**27.10.82 Patentblatt 82/43**

(84) Benannte Vertragsstaaten:
**AT BE CH DE FR GB IT LU NL SE**

(56) Entgegenhaltungen:
**CH-A-527 635**
**CH-A-543 295**
**DE-A-1 507 768**
**DE-A-1 507 843**
**DE-A-2 606 146**
**DE-B-1 228 130**
**DE-B-J-417 2**
**DE-B-St-26 37**
**DE-C-1 058 344**
**DE-C-1 097 792**
**US-A-3 948 623**

(73) Patentinhaber: **Fläkt Aktiebolag, Sickla Allé 13,
S-131 34 Nacka (SE)**

(72) Erfinder: **Apelgren, Roland, Stranden, Tävelsas
S-355 90 Växjö (SE)**

(74) Vertreter: **Eitle, Werner, Dipl.-Ing. et al, Hoffmann. Eitle
& Partner Patentanwälte Arabellastrasse 4,
D-8000 München 81 (DE)**

## Verfahren zur Steuerung des Reinigungsverlaufes beim Reinigen von Filtermaterial in textilen Sperrfiltern

Die vorliegende Erfindung betrifft ein Verfahren zur Steuerung des Reinigungsverlaufes beim Reinigen des Filtermaterials von textilen Sperrfiltern, vorzugsweise vom Schlauchfiltertyp, wo das verunreinigte Gas einer Filterkammer über einen Rohgaseinlauf zugeführt wird und das in der Filterkammer angebrachte Filtermaterial unter Ablagerung von Staub auf dem Filtermaterial passiert und aus der Filterkammer über einen Reingasauslauf abgeleitet wird, und die Reinigung dadurch bewirkt wird, daß das Filtermaterial einem Druckluftimpuls von einem Reinigungssystem ausgesetzt wird, das von einem Steuerungssystem gesteuert wird, welches mit Meßgliedern den Druckabfall ($p_f$) über das Filtermaterial abfühlt.

Bei einem herkömmlichen Steuerungssystem (DE-A-2 606 146) wird das Reinigungssystem des Schlauchfilters gewöhnlich vom Flansch-zu-Flansch-Druckabfall gesteuert. Die Verluste an den Ein- und Auslaufklappen wie auch die Kanalverluste sind im Flansch-zu-Flansch-Druckabfall inbegriffen. Das Reinigen wird eingeleitet, wenn ein Grenzwert für den Flansch-zu-Flansch-Druckabfall erreicht wird. Das Reinigungsintervall hängt somit von der Staubkonzentration des Gases ab. Das Verfahren eignet sich gut in Prozessoren, in denen die Betriebsverhältnisse, d. h. der Gasfluß, die Gastemperatur und die Staubkonzentration im wesentlichen konstant sind.

Bei Schwankungen im Gasfluß und in der Staubkonzentration dagegen neigt das vorstehend beschriebene Steuerungssystem dazu, weitgehend vom Gasfluß gesteuert zu werden, was vom abscheidungstechnischen Gesichtspunkt völlig ungeeignet ist. Da der Flansch-zu-Flansch-Druckabfall in jedem Augenblick proportional zum Gasfluß ist, kann die Reinigung durch kurzwährende Flußerhöhungen eingeleitet werden, ohne durch Staubablagerungen auf den Schläuchen bedingt zu sein. Dies führt zu Übereinigung, d. h. der Staubkuchen wird zerstört, und das Filtermaterial wird für den Gasstrom freigelegt. Da die Feinfraktion des Staubes leichter durch das freigelegte Filtermaterial hindurchdringen kann, erhöhen sich die Emission wie auch der Schlauchverschleiß und der Restwiderstand des Schlauches.

Es kann auch der entgegengesetzte Betriebsfall eintreffen, d. h. hohe Staubkonzentration und geringer Gasfluß, was in einem starken Zuwachs des Staubkuchens resultiert, ohne daß die Reinigung eingeleitet wird. Die Zunahme der Staubablagerung als solche genügt also nicht, um bei dem geringen Gasfluß den Grenzwert zur Einleitung der Reinigung zu erreichen. Wenn der Gasfluß zunimmt, wird die Reinigung unmittelbar eingeleitet, aber dann ist jedoch der Reinigungseffekt (Impulsdruck) nicht dem stärkeren Staubkuchen angepaßt. Infolgedessen sind zum Reinigen des Filters mehrere Reinigungen erforderlich, was erhöhten Schlauchverschleiß und kürzere Lebensdauer zur Folge hat. Im Extremfall kann sogar eintreffen, daß der Betriebspunkt der Anlage zum oberen Arbeitspunkt mit dem höheren Druckabfall und dem geringeren Gasfluß verschoben wird. Der obere Arbeitspunkt bezieht sich auf den Schnittpunkt zwischen der Anlage- bzw. Ventilatorkurve des Systems. Wenn die Anlage ein impulsgereinigtes Filter einschließt, erhält die Anlagekurve die Form einer schräg aufwärtsgerichteten Parabel, deren »Spitze« dem größtmöglichen Filterfluß entspricht. Wenn der obere Arbeitspunkt erreicht wurde, muß die Anlage erneut gestartet werden, um zum unteren Arbeitspunkt mit dem niedrigeren Druckabfall und der höheren Belastung zurückzugehen.

Bei einem bekannten Verfahren zur Konstanthaltung des Luftstromes von mit wechselnden Staubmengen beaufschlagten Aggregaten wird die Reinigung des Filters dann eingeleitet, wenn ein vom Luftdruck an der Lufteinlaßseite beaufschlagter Druckwächter beim Unterschreiten einer eingestellten Luftdurchsatzmenge ein Signal gibt, welches die Reinigungsvorrichtung des Filters solange in Betrieb setzt, bis die vorgewählte Luftmenge bzw. Meßdruck durch den abgesunkenen Filterwiderstand wieder erreicht ist, worauf die Filterreinigung ausgeschaltet wird. Der Filter arbeitet dabei also als Drosselventil. Dieses bekannte Verfahren befaßt sich jedoch nicht mit der Steuerung der Reinigung des Filters selbst. Auch bei diesem bekannten Verfahren ist nicht die Gewähr gegeben, daß ungeachtet von Schwankungen im Gasstrom, der Temperatur und der Staubkonzentration die Reinigung stets bei gleichem Staubbelag auf den Schläuchen eingeleitet wird (DE-A-1 507 768).

Es ist auch bekannt, den Reinigungsverlauf eines Schlauchfilters durch Einleitung der Reinigungsimpulse mit einem festgelegten Zeitintervall zu steuern, der dann so angepaßt ist, daß die erforderliche Reinigung bei dem Betriebsfall erfolgt, wenn die Belastung am größten ist. In diesem Fall erfolgt die Steuerung durch eine Zeitschaltuhreinrichtung. Es ist offensichtlich daß bei Belastung des Filters unterhalb der größtmöglichen Belastung das System eine Reinigung auch dann einleiten wird, wenn kein Reinigungsbedarf vorliegt. Die Folgen sind starker Verschleiß des Filtermaterials und verstärkte Emission.

Die Aufgabe der vorliegenden Erfindung ist die Schaffung eines verbesserten Steuerungssystemes, bei dem die Nachteile der herkömmlichen Verfahren beseitigt sind. Diese Aufgabe wird dadurch gelöst, daß dem Verfahren die im Patentanspruch 1 definierten Kennzeichen gegeben werden. Der Erfindung liegt somit die Einsicht zugrunde, daß das Reinigungssystem von der Staubablage auf dem Filtermaterial, gewöhnlich den Filterschläuchen, gesteuert werden soll, so daß ungeachtet von Schwankungen im Gasfluß und in der Staubkonzentration die Reinigung stets bei demselben Staubbelag auf den Schläuchen eingeleitet wird. Die Patentansprüche 2 und 3 geben ein geeignetes Verfahren an, bei dem die Viskosität des Gases berücksichtigt wird, was in den Fällen zweckmäßig ist, in denen das zu reinigende Gas außer Flußschwankungen auch Temperaturschwankungen aufweist. Die Patentansprüche 4 bis 7 geben alternative Verfahren zur Steuerung des Reinigungseffektes des Reinigungssystemes durch Einflußnahme auf die für den Reinigungseffekt bedeutungsvollen Parameter an.

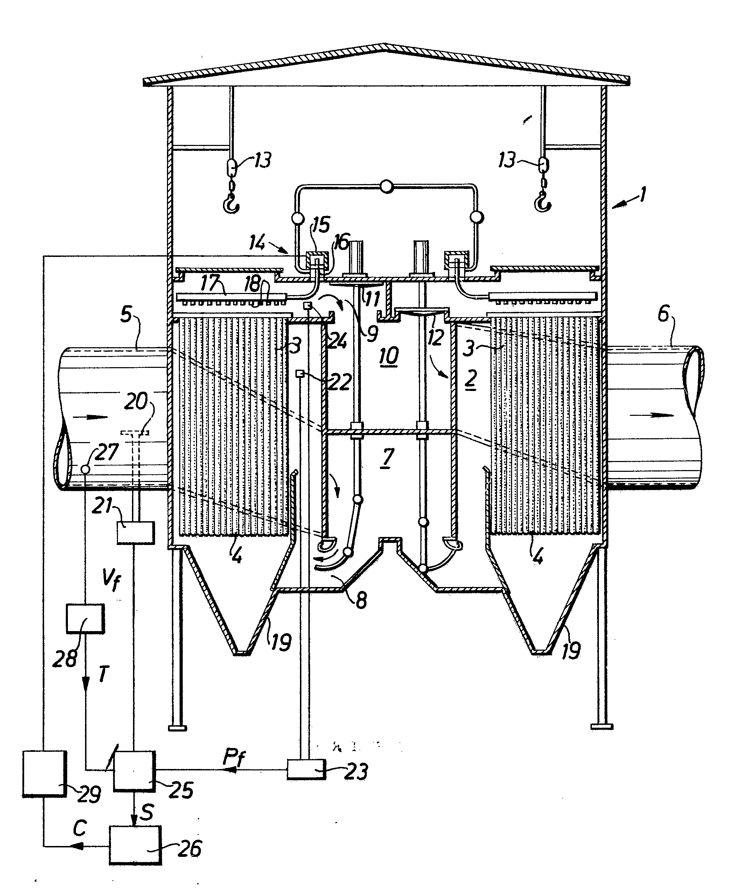

Die Erfindung wird nachstehend unter Bezugnahme auf die beigefügte Zeichnung, die ein Schnitt durch eine Filteranlage ist, näher beschrieben.

In der Zeichnung bezeichnet 1 ein Filtergehäuse mit darin angeordneten Filterkammern 2. In den Filterkammern befinden sich Kassetten 3 oder Pakete mit mehreren Reihen Schlauchfilterschläuchen 4. Das zu reinigende verunreinigte Gas wird dem Filtergehäuse über einen Rohgaskanal 5 zugeführt, und das gereinigte Gas wird über einen Reinluftkanal 6 vom Filtergehäuse abgeleitet. Innerhalb des Filtergehäuses wird das Rohgas über einen Kanal 7 zum Rohgaseinlaß 8 der Filterkammer geleitet und durchdringt dann die Filterschläuche 4 unter Ablagerung von Staub auf der Oberfläche des Filtermaterials. Das gereinigte Gas wird von der Reingasseite der Filterkammer über einen Reingasauslaß 9 zu einem im Filtergehäuse angeordneten Auslaßkanal 10 abgeleitet, der an den Reinluftkanal 6 angeschlossen ist. Das gezeigte Filter enthält mehrere Filterkammern (nicht gezeigt), die an die gemeinsamen Kanäle 7 und 10 angeschlossen sind. Klappenmittel 11 und 12 sind ferner angeordnet, um die Filterkammern erforderlichenfalls für Inspektion, Filterwechsel usw. absperren zu können. Für diesen Zweck ist eine Hebeeinrichtung 13 angeordnet, mit der eine Kassette aus der Filterkammer herausgehoben wird. Die in der Figur gezeigte rechte Filterkammer ist mit der Klappe 12 abgesperrt. Die linke Filterkammer ist, wie die Lage der Klappe 11 zeigt, in Betrieb. Der Gasstrom ist durch die Flußrichtung anzeigende Pfeile markiert.

Zum Reinigen der Filterschläuche ist eine Reinigungsvorrichtung 14 angeordnet, die in der gezeigten Ausführung einen Drucktank 15 für Reinigungsmittel, d. h. Druckluft, sowie ein Ventil 16 für die Zuführung des Reinigungsmittels zu einem mit Düsenrohren 18 versehenen Verteilerkanal 17 einschließt. Die Arbeitsweise und Konstruktion der in der Figur gezeigten Reinigungsvorrichtung werden hier nicht im einzelnen beschrieben, sondern es wird hier lediglich gesagt, daß sie von der in US-A-4 033 732 beschriebenen Art ist. Die Reinigung wird dadurch bewirkt, daß ein Druckimpuls in den Schlauch hinabgerichtet wird und dem Filtermaterial eine Beschleunigungs- und Verlangsamungsbewegung vermittelt wird, wodurch der Staub sich vom Filtermaterial löst und in der Staubtasche 19 gesammelt wird. Dieses Reinigungsverfahren ist gut erprobt, und es besteht eine gute Kenntnis der den Reinigungseffekt beeinflussenden Parameter.

Das Reinigungssystem wird gemäß der Erfindung wie folgt gesteuert. Durch eine im Rauchgaskanal 5 angeordnete Sonde 20 werden der Gesamtdruck des Gases und der statische Druck gemessen, wobei der dynamische Druck des Gases und dessen Schwankung mit der Zeit vom Druckgeber 21 aufgezeichnet werden können. Da der dynamische Druck eine Funktion des Gasflusses ist, wird somit ein Maß der Gasflußschwankung erhalten. In Kenntnis der aktuellen Kanalfläche und der Gesamtfläche des Filtermaterials kann die Filterbelastung $v_f$ als Ausgangssignal vom Druckgeber 21 erhalten werden. Die Filterbelastung ist definitionsmäßig der Quotient zwischen dem Gasfluß ($m^3/s$) und der Filterfläche ($m^2$). Normalerweise liegt $v_f$ zwischen 0,02 und 0,06 m/s.

Ein druckabfühlendes Glied 22 ist auf der Rohgasseite (dem Rohgaseinlaß 8) angeordnet, und der abgefühlte Druck wird zu einem Druckgeber 23 übertragen. Ein zweites druckabfühlendes Glied 24 ist am Reingasauslaß 9 der Filterkammer angeordnet, und der abgefühlte Druck wird ebenfals zum Druckgeber 23 übertragen, wo der Differenzdruck $p_f$ gebildet wird, der das Ausgangssignal von genanntem Geber ist. Der Differenzdruck $p_f$ ist somit der aktuelle Druckabfall über das Filtermaterial. $p_f$ schwankt bei gewöhnlichen Anwendungen von 0,75 bis 2,5 kPa. Die Ausgangssignale von den Gebern 21 und 23, d. h. $v_f$ und $p_f$, werden zu einer Elektronikeinheit 25 geleitet, die gemäß der Erfindung den Filterwiderstand S berechnet, der als der Quotient zwischen dem Druckabfall über das Filtermaterial $p_f$ und der Filterbelastung $v_f$ definiert ist. Gewöhnliche Werte von S sind 15 bis 50 kPa/(m/s). Das Ausgangssignal S von der Elektronikeinheit wird zu einer Grenzwerteinheit 26 geleitet, wo ein Vergleich mit einem Sollwert So des Filterwiderstandes erfolgt. Von dieser Grenzwerteinheit wird ein Signal C für die Filterreinigung gegeben, wenn der Filterwiderstand S den eingestellten Sollwert So erreicht hat. Das Signal C wird zu einer Steuerelektronikeinheit 29 geleitet, die die für das Reinigungssystem 14 erforderlichen Signale für die Durchführung der Reinigung gibt. Ein Druckluftkompressor wird gestartet, und ein elektro-mechanisches Ventil wird betätigt, das über ein Pilotventil das Ventil 16 öffnet und dadurch den Reinigungsprozeß einleitet.

Es kommen häufig Prozeßanwendungen vor, bei denen die Temperatur des Gases beträchtlich mit der Zeit schwankt. Hierbei ändert sich auch die Viskosität des Gases, was sich auf den Druckabfall über das Filtermaterial auswirkt, ohne daß der auf dem Filtermaterial abgelagerte Staubkuchen verändert wurde. Da es im Grundgedanken der Erfindung liegt, daß nur die Größe der Staubablagerung die Steuerung des Reinigungssystemes beeinflussen soll, schließt die Erfindung ein zweckmäßiges Verfahren ein, bei Temperaturschwankungen, und dadurch bei Viskositätsschwankungen, des Gases die Berechnung des Filterwiderstandes zu einer Bezugstemperatur $T_0$ zu normieren. Dies geschieht dadurch, daß ein temperaturabfühlendes Glied 27 die Temperatur des Gases abfühlt und den Wert der absoluten Temperatur T des Gases über einen Geber 28 zur Elektronikeinheit 25 überträgt. Bei Berechnungen des Filterwiderstandes S wird hier der Quotient $p_f/v_f$ mit $(T_0/T)^\alpha$ multipliziert, wobei $T_0$ eine Bezugstemperatur in °K und T die aktuelle Temperatur in °K sind. $\alpha$ ist eine Konstante, die bei Temperaturen unter 200° C den Wert 0,76 annimmt.

Erfindungsgemäß wird der Reinigungsverlauf dadurch gesteuert, daß auf einen der für den Effekt des Reinigungsverlaufes bedeutungsvollen Parameter Einfluß genommen wird. Die für die praktische Anwendung der Erfindung nächstliegende Weise ist die Steuerung des Reinigungseffektes durch Beeinflussung des Reinigungsintervalles oder des Zeitintervalles zwischen den Reinigungsimpulsen.

In diesem Zusammenhang kann darauf hingewiesen werden, daß das Reinigen einer Kassette mit Filterschläuchen in der Regel Reihe für Reihe erfolgt, und daß mit dem Begriff Reinigungsintervall die Zeit gemeint ist, die vom Beginn der Reinigung einer der Filterreihen in der Kassette bis zu dem Zeitpunkt vergeht, zu dem sämtliche Filterreihen gereinigt sind, und der nächste Reinigungsumlauf begonnen wird. Ein Reinigungsumlauf kann somit ein rasches Durchreinigen des Filterpaketes bedeuten, und es wird somit die Zeit bis zum nächsten Reinigungsintervall gesteuert. Im anderen Fall erfolgen die Reinigungen Reihe für Reihe und ohne Aufenthalt, wenn die Kassette durch und durch gereinigt wurde. Man beeinflußt also anstelle dessen die Zeit zwischen den Reinigungsimpulsen. Bei starker Staubablagerung auf dem Filtermaterial werden die Zeitintervalle zwischen den Reinigungen kurz und bei geringer Staubablagerung werden die entsprechenden Zeitintervalle lang.

Da der Reinigungseffekt vom Druck des Reinigungsimpulses abhängt, und ein hoher Druck einen kräftigeren Reinigungseffekt bewirkt als ein niedriger Druck, kann gem. einer alternativen Weise der Druck des Reinigungsimpulses zur Regelung des Reinigungseffektes beeinflußt werden. In diesem Fall ist das Zeitintervall zwischen den Druckimpulsen vorzugsweise konstant, und das System gibt vor jeder Reinigung ein Signal, das den Reinigungsdruck derart beeinflußt, daß der folgende Reinigungsimpuls gerade so kräftig ist, um die erforderliche Reinigung zu bewerkstelligen. Die eigentliche Steuerung des Impulsdruckes kann auf verschiedene Weise geschehen, z. B. durch Steuerung des Tankdruckes, was für den Fachmann naheliegend ist. Einer anderen Alternativen zufolge kann der Reinigungseffekt des Reinigungsimpulses durch Beeinflussung seiner Dauer beeinflußt werden. Bei frühem Abbrechen des Impulses wird ein reduzierter Reinigungseffekt im Vergleich mit dem erhalten, der sich ergibt, wenn man den Impuls sich ganz entwickeln läßt. Rein praktisch kann dies dadurch zustandegebracht werden, daß man die Dauer des Signales C ändert.

Das nachstehende Anwendungsbeispiel dient zur näheren Beschreibung der Erfindung. Der Versuch wurde in einer Schlauchfilteranlage durchgeführt, die das Gas nach einem Elektro-Lichtbogenofen reinigte. In diesen Anlagen schwankt der Gasfluß während des Betriebes beträchtlich, und desgleichen schwankt die Temperatur. Der Fluß durch das Filter schwankte zwischen 300 000 m³/h und 440 000 m³/h (m³ jeweils im Normzustand). Die Temperatur schwankte zwischen 20°C und 100°C. Die Filteranlage hatte vier Sektionen mit je 336 Schläuchen, von denen jeder eine Länge von 5 m und einen Durchmesser von 0,127 m hatte. Die gesamte Filterfläche betrug 2688 m². Im Vergleich mit herkömmlichem Betrieb führte die Betriebsart gemäß der Erfindung zu einer Verlängerung des durchschnittlichen Reinigungsintervalles um 33%, von 1,25 auf 1,65 Minuten. In dem Fall, in dem auch die Temperaturschwankung des Gases berücksichtigt wurde, verlängert sich das Reinigungsintervall noch von 1,65 auf 1,85 Minuten.

Die sich bei Anwendung der Erfindung gegenüber herkömmlicher Technik ergebenden Vorteile lassen sich wie folgt zusammenfassen.

Das Reinigen der Filterschläuche erfolgt stets bei einer bestimmten Staubdecke auf den Schläuchen. Es wird also Überreinigung mit resultierendem erhöhten Schlauchverschleiß vermieden, und die Schläuche halten hierdurch länger. Die Gesamtemission für die Filteranlage ist geringer, da keine Schläuche überreinigt werden, sondern stets ein Staubkuchen auf dem Filtermaterial verbleibt. Hierdurch wird auch tiefes Eindringen von feinem Staub in das Filtermaterial verhütet, was geringeren Filterwiderstand und dadurch niedrigeren durchschnittlichen Druckabfall über die Filterschläuche ergibt. Dies bedeutet beträchtliche Energieeinsparung in Form verminderter Ventilatorarbeit. Die verminderte Anzahl Reinigungen bringt auch mit sich, daß der Energieverbrauch für das eigentliche Reinigungssystem geringer ist.

**Patentansprüche**

1. Verfahren zur Steuerung des Reinigungsverlaufes bei Reinigung des Filtermaterials von textilen Sperrfiltern, vorzugsweise vom Schlauchfiltertyp, wobei das verunreinigte Gas einer Filterkammer über einen Rohgaseinlauf zugeführt wird und das in der Filterkammer angebrachte Filtermaterial unter Ablagerung von Staub auf dem Filtermaterial passiert und von der Filterkammer über einen Reingasauslaß abgeleitet wird, und die Reinigung dadurch bewirkt wird, daß das Filtermaterial einem Druckluftimpuls von einem Reinigungssystem ausgesetzt wird, das von einem Steuerungssystem gesteuert wird, welches mit Meßgliedern den Druckabfall ($p_f$) über das Filtermaterial abfühlt, dadurch gekennzeichnet, daß das Steuersystem auch die Filterbelastung ($v_f$), die aus dem Quotienten zwischen dem Gasfluß und der Filterfläche besteht, abfühlt und den Quotienten zwischen $p_f$ und $v_f$, d. h. den Filterwiderstand (S), bildet, der bei Vergleich mit einem Sollwert (So) des Filterwiderstandes ein Signal zur Steuerung wenigstens eines der Parameter gibt, die den Reinigungseffekt des Reinigungssystems auf das Filtermaterial beeinflussen.

2. Verfahren nach Anspruch 1, dadurch gekennzeichnet, daß das Steuerungssystem mit temperaturabfühlenden Gliedern die absolute Temperatur (T) des Gases mißt und den Filterwiderstand mit Rücksicht auf die aktuelle Gastemperatur durch das Verhältnis korrigiert, das die Viskositätsänderung des Gases in Beziehung zu einer Bezugstemperatur ($T_0$) bestimmt.

3. Verfahren nach Anspruch 2, dadurch gekennzeichnet, daß die Korrektur durch Berechnung des Produktes aus dem Quotienten $p_f/v_f$ und $(T_0/T)^\alpha$ geschieht, wobei $T_0$ eine Bezugstemperatur in °K und $\alpha$ eine Konstante sind.

4. Verfahren nach den Ansprüchen 1 bis 3, dadurch gekennzeichnet, daß das Reinigungsintervall beeinflußt wird.

5. Verfahren nach den Ansprüchen 1 bis 3, dadurch gekennzeichnet, daß der Reinigungseffekt des Reinigungssystems vom Steuerungssystem durch Beeinflussung des Zeitintervalles zwischen den Reinigungsimpulsen gesteuert wird.

6. Verfahren nach den Ansprüchen 1 bis 3, dadurch gekennzeichnet, daß der Reinigungseffekt des Reinigungssystems vom Steuerungssystem durch Beeinflussung des Reinigungsdruckes des Reinigungsimpulses gesteuert wird.

7. Verfahren nach Ansprüchen 1 bis 3, dadurch gekennzeichnet, daß der Reinigungseffekt des Reinigungssystems vom Steuerungssystem durch Beeinflussung der Dauer des Reinigungsimpulses gesteuert wird.

## Claims

1. Method for the control of the purification process in the purification of the filter material of textile rejection filters, preferably of the bag filter type, wherein the contaminated gas of a filter chamber is led in via a raw gas inlet and the filter material installed in the filter chamber, passes under the deposit of dust on the filter material and is drawn away from the filter chamber through a clean gas outlet and the purification is effected in such manner that the filter material is exposed to a compressed air impulse from a purification system, which is controlled by a control system, which senses with measuring elements the pressure drop ($P_f$) across the filter material, characterised in that the control system also senses the filter loading ($V_f$) which consists of the quotient of the gas flow and the filter area, and forms the quotient of $P_f$ and $V_f$, i. e. the filter resistance(s), which upon comparison of the filter resistance with a desired value ($S_0$) produces a signal for the control of at least one of the parameters which influence the purification effect on the filter material of the purification system.

2. A method according to claim 1 characterised in that the control system measures the absolute temperature (T) of the gas with the temperature sensing members and corrects the filter resistance having regard to the actual gas temperature in accordance with the relationship which determines the viscosity change of the gas in depence upon a reference temperature ($T_0$).

3. A method according to claim 2 characterised in that the correction occurs through calculation of the products from the quotients $P_f/V_f$ and $(T_0/T)^\alpha$, wherein $T_0$ is a reference temperature in degrees Kelvin and $\alpha$ is a constant.

4. A method according to claims 1 to 3 characterised in that the purification interval is influenced.

5. A method according to claims 1 to 3 characterised in that the purification effect of the purification system is controlled by the control system through the influence of the time intervals between the purification pulses.

6. A method according to claims 1 to 3 characterised in that the purification effect of the purification system is controlled by the control system through the influence of the purification pressure of the purification pulse.

7. A method according to claims 1 to 3 characterised in that the purification effect of the purification system is controlled by the control system through the influence of the duration of the purification pulse.

## Revendications

1. Procédé de commande du processus de nettoyage de matière filtrante dans les filtres textiles d'arrêt, de préférence du type à tubes souples, dans lesquels le gaz pollué est amené à une chambre de filtration à travers une entrée de gaz brut, traverse la matière filtrante, installée dans ladite chambre de filtration, en déposant de la poussière sur la matière filtrante et est évacué de cette même chambre de filtration à travers une sortie de gaz pur, le nettoyage s'obtenant par le fait que la matière filtrante est soumise à une impulsion d'air comprimé par un système de nettoyage commandé par un système de commande qui palpe par des organes de mesure la chute de pression ($p_f$) sur la matière fitrante,

procédé caractérisé par le fait que le système de commande palpe aussi la charge ($v_f$) du filtre, laquelle s'exprime par le quotient du flux gazeux par la surface de filtre, et forme le quotient de $p_f$ par $v_f$, c'est-à-dire la résistance (S) du filtre, qui, comparée avec une valeur de consigne ($S_0$) de la résistance du filtre, émet un signal pour la commande d'au moins un des paramètres qui agissent sur l'effet nettoyant du système de nettoyage sur la matière filtrante.

2. Procédé selon la revendication 1 caractérisé par le fait que le système de commande mesure par des organes palpeurs la température absolue (T) du gaz et corrige la résistance du filtre en égard à la température actuelle du gaz par le rapport qui détermine la variation de viscosité du gaz par rapport à une température de référence ($T_0$).

3. Procédé selon la revendication 2 caractérisé par le fait que la correction s'opère par calcul du produit du quotient $p_f/v_f$ par $(T_0/T)^\alpha$, $T_0$ désignant une température de référence en °K et $\alpha$ une constante.

4. Procédé selon l'une quelconque des revendications 1 à 3 caractérisé par le fait que l'on agit sur l'intervalle de nettoyage.

5. Procédé selon l'une quelconque des revendications 1 à 3 caractérisé par le fait que l'on commande par le système de commande l'effet nettoyant du système de nettoyage par action sur l'intervalle de temps entre les impulsions de nettoyage.

6. Procédé selon l'une quelconque des revendications 1 à 3 caractérisé par le fait que l'on commande par le système de commande l'effet nettoyant du système de nettoyage par action sur la pression de nettoyage de l'impulsion de nettoyage.

7. Procédé selon l'une quelconque des revendications 1 à 3 caractérisé par le fait que l'on commande par le système de commande l'effet nettoyant du système de nettoyage par action sur la durée de l'impulsion de nettoyage.